Europäisches Patentamt

European Patent Office

Office européen des brevets

(11) Veröffentlichungsnummer: **0 328 167**
**A2**

## (12) EUROPÄISCHE PATENTANMELDUNG

(21) Anmeldenummer: **89200047.2**

(22) Anmeldetag: **10.01.89**

(51) Int. Cl.⁴: **G01M 9/00**

(30) Priorität: **10.02.88 DE 3804044**

(43) Veröffentlichungstag der Anmeldung:
**16.08.89 Patentblatt 89/33**

(84) Benannte Vertragsstaaten:
**DE FR GB IT**

(71) Anmelder: **METALLGESELLSCHAFT AG**
**Reuterweg 14 Postfach 3724**
**D-6000 Frankfurt/M.1(DE)**

(72) Erfinder: **Brehm, Lothar**
**Sachsenhäuser Landwehrweg 69**
**D-6000 Frankfurt am Main 70(DE)**

(54) **Kolben für einen Hochenthalpie-Windkanal.**

(57) Der Kolben dient zur Erzeugung eines Druckstoßes in einem Windkanal, er wird unter der Wirkung eines Gasdrucks von mindestens 20 bar in einem ersten Kanal von einer Startposition zu einer Aufprallfläche fliegend bewegt. Unter der vom heranfliegenden Kolben erzeugten Kompression zerreißt eine Membran am Ende des ersten Kanals; der dabei freiwerdende Druckstoß wird durch einen mit Testgas gefüllten zweiten Kanal zu einer Folie geleitet. Die Folie zerreißt und läßt das Testgas als Stoßwelle im Überschallbereich in eine Testkammer strömen. Das hintere Ende des Kolbens weist einen Verriegelungsansatz auf, der in der Startposition mit einem ortsfesten Halter zusammenwirkt.

# Fig.1

## Kolben für einen Hochenthalpie-Windkanal

Die Erfindung betrifft einen Kolben zur Erzeugung eines Druckstoßes in einem Windkanal, wobei der Kolben unter der Wirkung eines Gasdrucks von mindestens 20 bar in einem ersten Kanal von einer Startposition zu einer Aufprallfläche fliegend bewegt wird, so daß unter der vom heranfliegenden Kolben erzeugten Kompression eine Membran am Ende des erstes Kanals zerreißt, der dabei freiwerdende Druckstoß durch einen mit Testgas gefüllten zweiten Kanal zu einer Folie geleitet wird, wobei die Folie zerreißt und das Testgas als Stoßwelle in eine Testkammer strömt.

Der Erfindung liegt die Aufgabe zugrunde, den Kolben betriebssicher auszubilden und dafür zu sorgen, daß er die Startposition nicht versehentlich oder bei Dichtungsversagen, sondern nur durch eine von außen gesteuerte Einwirkung verläßt. Bei der eingangs genannten Vorrichtung geschieht dies dadurch, daß das hintere Ende des Kolbens einen Verriegelungsansatz aufweist, der in der Startposition mit einem ortsfesten Halter mit in den Verriegelungsansatz eingreifendem, lösbarem Riegel zusammenwirkt. Erst wenn der von außen zu betätigende Riegel gelöst wird, fliegt der Kolben unter der Wirkung des Gasdrucks durch den ersten Kanal auf die Aufprallfläche zu. Weil der Gasdruck, der im Bereich von etwa 20 bis 500 bar liegen kann, bereits voll auf den Kolben einwirkt, bevor er vom Halter ausgeklinkt wird, erfolgt die Beschleunigung des Kolbens verzögerungsfrei und erreicht ein Maximum.

Der Kolben ist für größere Windkanäle, z.B. Hochenthalpie-Windkanäle, geeignet, mit denen Untersuchungen an Modellflugkörpern möglich sind, um Bedingungen zu testen, wie sie z.B. für Raumflugkörper beim Eintritt in die Erdatmosphäre herrschen. Das Gewicht des Kolbens kann hierbei im Bereich von etwa 200 bis 2000 kg liegen.

Ausgestaltungsmöglichkeiten der Vorrichtung werden mit Hilfe der Zeichnung erläutert. Es zeigt:

Fig. 1 den Windkanal und den Kolben in schematischer Darstellung,

Fig. 2 den ortsfesten Halter im Längsschnitt und

Fig. 3 den Kolben im Längsschnitt.

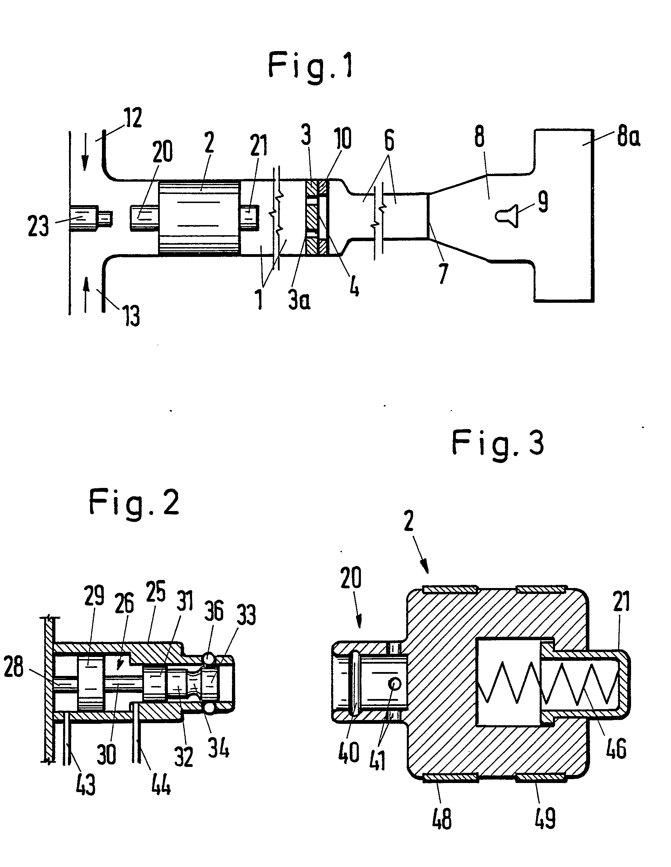

Der Hochenthalpie-Windkanal besteht gemäß Fig. 1 im wesentlichen aus einem ersten Kanal (1), in welchem der Kolben (2) bewegt wird, einer ortsfesten Aufprallplatte (3) mit dahinter angeordneter Membran (4), einem zweiten Kanal (6), an dessen Ende sich eine Folie (7) befindet, eine Testkammer (8) und ein darin befindlicher Testkörper (9). Aus einem oder mehreren, nicht dargestellten Druckbehältern wird Treibgas, zumeist Luft, durch die Einlässe (12) und (13) herangeführt, wobei ein Gasdruck von 20 bar und mehr auf den Kolben (2) einwirkt und diesen zur Aufprallplatte (3) hin beschleunigt. Der Kolben weist am hinteren Ende einen Verriegelungsansatz (20) und am vorderen Ende einen Puffer (21) auf.

Während sich der fliegende Kolben (2) auf die Aufprallplatte (3) zubewegt, wird das zwischen Kolben und Platte befindliche Gas immer mehr komprimiert. Dieser Gasdruck wird durch mehrere Löcher (3a) in der Platte (3) auf die dahinter befindliche Membran (4) übertragen. Der Rand der Membran wird durch einen lösbaren Ring (10) gehalten. Wenn die durch den heranfliegenden Kolben erzeugte Kompression des Gases hoch genug ist, zerreißt die Membran, wodurch ein Druckstoß in die zweite Kammer (6) geleitet wird. Diese zweite Kammer ist mit einem Testgas, z.B. Luft, Sauerstoff oder Helium, gefüllt. Der Druckstoß pflanzt sich durch dieses Testgas hindurch nach rechts zu der Folie (7) fort und zerreißt diese Folie. Dadurch strömt das Testgas stoßartig in die unter Vakuum stehende Testkammer (8) und prallt auf den Testkörper (9). Das Verhalten des Testkörpers (9) unter diesem Druckstoß wird durch an sich bekannte, hier nicht dargestellte Untersuchungsmethoden registriert. Die Testkammer (8) ist hinter dem Testkörper (9) zu einem Gasbehälter (8a) erweitert, der das anströmende Testgas aufnimmt.

Als Beispiel sei genannt, daß die Länge der ersten Kammer (1) 10 bis 50 m und ihr Durchmesser 0,3 bis 1,0 m betragen kann, die Länge der zweiten Kammer (6) kann 10 bis 40 m und ihr Durchmesser 0,1 bis 0,5 m betragen.

Um den Kolben (2) in der Startposition festzuhalten und ihn nur auf einen von außen zugeführten Steuerimpuls freizugeben, ist ein ortsfester Halter (23) vorhanden. Der Verriegelungsansatz (20) des Kolbens (2) paßt zu diesem Halter (23), vgl. Fig. 2 und 3. Der Halter weist ein zylindrisches, ortsfestes Gehäuse (25) auf, in welchem ein bewegbarer Verriegelungskolben (26) sitzt. Der Kolben (26) besteht aus einem Stützschaft (28), einem hinteren Kolbenabschnitt (29), einem Verbindungsschaft (30), einem vorderen Kolbenabschnitt (31) und einem Verriegelungsansatz (32) mit einem zylindrischen Kopf (33) und einem eingezogenen Hals (34). Kopf (33) und Hals (34) wirken abwechselnd mit mehreren Kugeln (36) zusammen, die im vorderen, eingezogenen Teil des Gehäuses (25) sitzen.

Der Verriegelungsansatz (20) des Kolbens (2), vgl. Fig. 3, wird zum Verriegeln in der Startposition auf das vordere Ende des Gehäuses (25) des Halters (23) geschoben, wobei die Kugeln (36) in eine Ringnut (40) an der Innenseite des Ansatzes (20) eingreifen. Der Verriegelungskolben (26) hat dabei die in Fig. 2 dargestellte Lage, wobei er die Kugeln (36) mit seinem Kopf (33) in der Ringnut (40) fixiert. Öffnungen (41) im Ansatz (20) sorgen dafür, daß der Gasdruck der Umgebung in den Ansatz (20) eindringen und auf den Kopf (33) einwirken und diesen in der Verriegelungsposition festhalten kann. Unbeabsichtigtes Lösen des Kolbens (2) vom Halter (23) ist dadurch ausgeschlossen.

Zur Entriegelung und Freigabe des Kolbens (2) gibt man durch die Leitung (43) (vgl. Fig. 2) von außen Druck auf den hinteren Kolbenabschnitt (29) und schiebt den Verriegelungskolben nach vorne, so daß der eingezogene Hals (34) unter die Kugeln (36) zu liegen kommt. Dadurch wird der durch die Kugeln (36) gebildete Riegel gelöst und der aus den Leitungen (12) und (13) kommende Gasdruck kann den Kolben (2) fliegend auf die Aufprallplatte (3) zu beschleunigen. Um den Verriegelungskolben (26) in die in Fig. 2 dargestellte Verriegelungsposition zurückzubewegen, gibt man hydraulischen oder pneumatischen Druck durch die Leitung (44) in das Gehäuse (25) in den Bereich zwischen dem größeren hinteren Kolbenabschnitt (29) und dem kleineren vorderen Kolbenabschnitt (31), wodurch der Verriegelungskolben zurück in die Verriegelungsposition bewegt wird.

Der Kolben (2), vgl. Fig. 3, weist einen Puffer (21) auf, der mit schematisch dargestellten Federelementen (46) zusammenwirkt. Diese Federelemente dämpfen den Aufprall des Kolbens (2) auf die Aufprallplatte (3) ab. Die Außenfläche des Kolbens (2) ist mit elastischen Gleitringen (48, 49) ausgestattet, welche dichtend zwischen dem Kolben (2) und der Innenseite des ersten Kanals (1) wirken.

## Ansprüche

1. Kolben zur Erzeugung eines Druckstoßes in einem Windkanal, wobei der Kolben unter der Wirkung eines Gasdrucks von mindestens 20 bar in einem ersten Kanal von einer Startposition zu einer Aufprallfläche fliegend bewegt wird, so daß unter der vom heranfliegenden Kolben erzeugten Kompression eine Membran am Ende des erstes Kanals zerreißt, der dabei freiwerdende Druckstoß durch einen mit Testgas gefüllten zweiten Kanal zu einer Folie geleitet wird, wobei die Folie zerreißt und das Testgas als Stoßwelle im Überschallbereich in eine Testkammer strömt, dadurch gekennzeichnet, daß das hintere Ende des Kolbens einen Verriegelungsansatz aufweist, der in der Startposition mit einem ortsfesten Halter mit in den Verriegelungsansatz eingreifendem, lösbarem Riegel zusammenwirkt.

2. Kolben nach Anspruch 1, dadurch gekennzeichnet, daß das vordere Ende des Kolbens einen Puffer aufweist.

3. Kolben nach Anspruch 1 oder 2, dadurch gekennzeichnet, daß der Verriegelungsansatz als Hülse mit einer inneren Ringnut ausgebildet ist und der Halter radial bewegbare, in der Verriegelungslage in die Ringnut eingreifende Kugeln aufweist.

4. Kolben nach Anspruch 3, dadurch gekennzeichnet, daß der Halter einen hydraulisch oder pneumatisch bewegbaren, auf die Kugeln mit einem Steuerungsansatz einwirkenden Verriegelungskolben aufweist.

5. Kolben nach Anspruch 4, dadurch gekennzeichnet, daß der Verriegelungskolben ein- oder mehrstufig und in beiden Richtungen mechanisch, pneumatisch oder hydraulisch bewegbar ausgebildet ist.

EP 0 328 167 A2

Fig.1

Fig.3

Fig.2